# FASCICULE DE BREVET EUROPEEN

(11) **EP 2 170 768 B1**
(45) Date de publication et mention de la délivrance du brevet: **05.06.2013**
(21) Numéro de dépôt: 08828013.6
(22) Date de dépôt: 24.06.2008
(51) Int. Cl.: C01B 37/02, C01B 39/48

(54) **SOLIDE CRISTALLISE IM-16 ET SON PROCEDE DE PREPARATION**
KRISTALLISIERTER IM-16-FESTKÖRPER UND HERSTELLUNGSVERFAHREN DAFÜR
IM-16 CRYSTALLIZED SOLID AND METHOD OF PREPARATION THEREOF

(30) Priorité: 20.07.2007 FR 0705315
(43) Date de publication de la demande: 07.04.2010
(73) Titulaire: IFP Energies nouvelles, 92852 Rueil-Malmaison Cedex (FR)
(72) Inventeur: LORGOUILLOUX, Yannick, F-87100 Limoges (FR); PAILLAUD, Jean-Louis, F-68100 Mulhouse (FR); CAULLET, Philippe, F-68110 Illzach (FR); PATARIN, Joël, F-68720 Flaxlanden (FR); BATS, Nicolas, F-69320 Feyzin (FR)
(86) Numéro de dépôt international: PCT/FR2008/000891
(87) Numéro de publication internationale: WO 2009/024665

(56) Documents cités:
- EP-A- 1 440 936
- EP-A- 1 454 882
- EP-A- 1 518 827
- WO-A-2007/135266

## Description

### Domaine technique

La présente invention se rapporte à un nouveau solide cristallisé appelé ci-après IM-16 présentant une nouvelle structure cristalline ainsi qu'au procédé de préparation dudit solide.

### Art antérieur

La recherche de nouveaux tamis moléculaires microporeux a conduit au cours des dernières années à la synthèse d'une grande variété de cette classe de produits. Une grande variété d'aluminosilicates à structure zéolithique caractérisés notamment par leur composition chimique, le diamètre des pores qu'ils contiennent, la forme et la géométrie de leur système microporeux a ainsi été développée.
Parmi les zéolithes synthétisées depuis une quarantaine d'années, un certain nombre de solides ont permis de réaliser des progrès significatifs dans les domaines de l'adsorption et de la catalyse. Parmi celles-ci, on peut citer la zéolithe Y (US 3,130,007) et la zéolithe ZSM-5 (US 3,702,886). Le nombre de nouveaux tamis moléculaires, recouvrant les zéolithes, synthétisés chaque année est en progression constante. Pour avoir une description plus complète des différents tamis moléculaires découverts, on peut utilement se référer à l'ouvrage suivant : "Atlas of Zeolite Framework Types", Ch. Baerlocher, W.M. Meier and D.H. Olson, Fifth Revised Edition, 2001, Elsevier. On peut citer la zéolithe NU-87 (US-5,178,748), la zéolithe MCM-22 (US-4,954,325) ou bien encore le gallophosphate (clovérite) de type structural CLO (US-5,420,279), ou encore les zéolithes ITQ-12 (US-6,471,939), ITQ-13 (US-6,471,941), CIT-5 (US-6,043,179), ITQ-21 (WO-02/092511), ITQ-22 (Corma, A. et al, Nature Materials 2003, 2, 493), SSZ-53 (Burton, A., et al, Chemistry : a Eur. Journal, 2003, 9, 5737), SSZ-59 (Burton, A., et al, Chemistry : a Eur. Journal, 2003, 9, 5737), SSZ-58 (Burton, A., et al, J. Am. Chem. Soc., 2003, 125, 1633) et UZM-5 (Blackwell, C.S. et al, Angew. Chem., Int. Ed., 2003, 42, 1737).
Plusieurs des zéolithes précédemment citées ont été synthétisées en milieu fluorure dans lequel l'agent mobilisateur n'est pas l'ion hydroxyde habituel mais l'ion fluorure selon un procédé initialement décrit par Flanigen et al (US-4,073,865), puis développé par J.-L. Guth et al. (Proc. Int. Zeol. Conf., Tokyo, 1986, p. 121). Les pH des milieux de synthèses sont typiquement proches de la neutralité. Un des avantages de ces systèmes réactionels fluorés est de permettre l'obtention de zéolithes purement siliciques contenant moins de défauts que les zéolithes obtenues en milieu OH⁻ traditionnel (J.M. Chézeau et al., Zeolites, 1991, 11, 598). Un autre avantage décisif lié à l'utilisation de milieux réactionnels fluorés est de permettre l'obtention de nouvelles topologies de charpente silicique contenant des doubles cycles à quatre tétraèdres (D4R), comme dans le cas des zéolithes ITQ-7, ITQ-12 et ITQ-13. Par ailleurs, l'utilisation conjointe de sources de germanium et de silicium dans les milieux de synthèse peut aussi permettre l'obtention de nouvelles charpentes de ce type, c'est-à-dire contenant des unités D4R, aussi bien en milieu basique classique non fluoré qu'en milieu fluoré, comme dans le cas des zéolithes ITQ-17 et ITQ-21 (A. Corm et al, Chem. Commun., 2001, 16, 1486, Chem. Commun., 2003, 9, 1050), ou IM-12 (JL.Paillaud et al, Science, 2004, 304, 990).

### Description de l'invention

La présente invention a pour objet un nouveau solide cristallisé, appelé solide cristallisé IM-16, présentant une nouvelle structure cristalline. Ledit solide présente une composition chimique exprimée par la formule générale suivante : mXO₂ : nGeO₂ : pZ₂O₃ : qR : sF : wH₂O dans laquelle R représente une ou plusieurs espèce(s) organique(s), X représente un ou plusieurs élément(s) tétravalent(s) différent(s) du germanium, Z représente au moins un élément trivalent et F est le fluor, m, n, p, q, s et w représentant respectivement le nombre de moles de XO₂, GeO₂, Z₂O₃, R, F et H₂O et m est compris entre 0,2 et 1, n est compris entre 0 et 0,8, p est compris entre 0 et 0,1, q est compris entre 0 et 0,2, s est compris entre 0 et 0,2 et w est compris entre 0 et 0,2.

Le solide cristallisé IM-16 selon l'invention présente un diagramme de diffraction de rayons X incluant au moins les raies inscrites dans le tableau 1. Ce nouveau solide cristallisé IM-16 présente une nouvelle structure cristalline.
Ce diagramme de diffraction est obtenu par analyse radiocristallographique au moyen d'un diffractomètre en utilisant la méthode classique des poudres avec le rayonnement K_{α1} du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'erreur de mesure Δ(dₕₖₗ) sur dₕₖₗ est calculée grâce à la relation de Bragg en fonction de l'erreur absolue Δ(2θ) affectée à la mesure de 2θ. Une erreur absolue Δ(2θ) égale à ± 0,02° est communément admise. L'intensité relative I/I₀ affectée à chaque valeur de dₕₖₗ est mesurée d'après la hauteur du pic de diffraction correspondant. Le diagramme de diffraction des rayons X du solide cristallisé IM-16 selon l'invention comporte au moins les raies aux valeurs de dₕₖₗ données dans le tableau 1. Dans la colonne des dₕₖₗ, on a indiqué les valeurs moyennes des distances inter-réticulaires en Angstrôms (Å). Chacune de ces valeurs doit être affectée de l'erreur de mesure Δ(dₕₖₗ) comprise entre ± 0,2Å et ± 0,003Å. Le diagramme DRX ayant permis d'établir le tableau 1 a été réalisé à partir d'un solide cristallisé IM-16 sous sa forme brute de synthèse.

**Tableau 1 : Valeurs moyennes des dₕₖₗ et intensités relatives mesurées sur un diagramme de diffraction de rayons X du solide cristallisé IM-16**

| 2 thêta (°) | dₕₖₗ(Å) | I/I₀ | 2 thêta (°) | dₕₖₗ(Å) | I/I₀ |
|---|---|---|---|---|---|
| 7,55 | 11,70 | ff | 24,45 | 3,64 | ff |
| 8,73 | 10,12 | FF | 24,68 | 3,60 | ff |
| 9,81 | 9,01 | f | 24,94 | 3,57 | f |
| 10,74 | 8,23 | ff | 25,25 | 3,52 | f |
| 11,59 | 7,63 | ff | 25,46 | 3,50 | ff |
| 13,15 | 6,73 | ff | 26,39 | 3,37 | f |
| 14,53 | 6,09 | ff | 26,96 | 3,31 | ff |
| 15,13 | 5,85 | f | 28,61 | 3,12 | ff |
| 15,30 | 5,79 | ff | 29,74 | 3,00 | ff |
| 15,75 | 5,62 | ff | 30,88 | 2,89 | ff |
| 15,92 | 5,56 | ff | 31,05 | 2,88 | ff |
| 17,51 | 5,06 | ff | 31,81 | 2,81 | ff |
| 17,64 | 5,02 | ff | 32,16 | 2,78 | ff |
| 19,70 | 4,50 | ff | 34,61 | 2,59 | ff |
| 20,12 | 4,41 | ff | 35,29 | 2,54 | ff |
| 23,32 | 3,81 | f | 35,49 | 2,53 | ff |
| 23,73 | 3,75 | f | 36,86 | 2,44 | ff |
| 24,08 | 3,69 | mf | | | |

| | | | | | |
|---|---|---|---|---|---|
| où FF = très fort ; m = moyen ; f = faible ; F = fort ; mf = moyen faible ; ff = très faible. | | | | | |

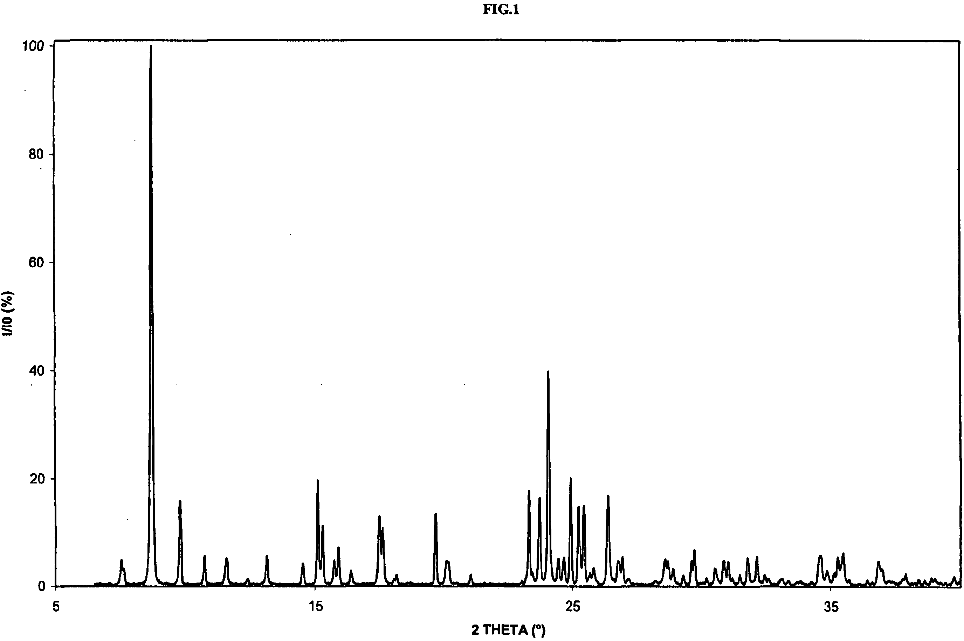

L'intensité relative I/I₀ est donnée en rapport à une échelle d'intensité relative où il est attribué une valeur de 100 à la raie la plus intense du diagramme de diffraction des rayons X : ff<15 ; 15 ≤f<30 ; 30≤mf<50 ; 50≤m<65 ; 65≤F<85 ; FF≥85.
Le diagramme de diffraction des rayons X du solide cristallisé IM-16 selon l'invention ne comporte pas de raie ayant une intensité relative I/I₀ forte (F) et moyenne (m).
Le solide cristallisé IM-16 selon l'invention présente une nouvelle structure cristalline de base ou topologie qui est caractérisée par son diagramme de diffraction X donné par la figure 1. La figure 1 été établie à partir d'un solide cristallisé IM-16 sous sa forme brute de synthèse.

Ledit solide IM-16 présente une composition chimique définie par la formule générale suivante : mXO₂ : nGeO₂ : pZ₂O₃ : qR : sF : wH₂O (I), où R représente une ou plusieurs espèce(s) organique(s), X représente un ou plusieurs élément(s) tétravalent(s) différent(s) du germanium, Z représente au moins un élément trivalent et F est le fluor. Dans la formule (I), m, n, p, q, s et w représentent respectivement le nombre de moles de XO₂, GeO₂, Z₂O₃, R, F et H₂O et m est compris entre 0,2 et 1, n est compris entre 0 et 0,8, p est compris entre 0 et 0,1, q est compris entre 0 et 0,2, s est compris entre 0 et 0,2 et w est compris entre 0 et 0,2. Avantageusement, le rapport X/Ge de la charpente du solide cristallisé IM-16 selon l'invention est compris entre 0,25 et ∞, de préférence entre 0,5 et 1,5 et de manière très préférée entre 0,7 et 1. La valeur de n est préférentiellement comprise entre 0,05 et 0,8. Le rapport {(n+m)/p} est supérieur ou égal à 10 et est de manière préférée supérieur ou égal à 20. La valeur de p est comprise entre 0 et 0,1, très préférentiellement comprise entre 0 et 0,05 et de manière encore plus préférée comprise entre 0,01 et 0,02. La valeur de q est comprise entre 0 et 0,2, avantageusement entre 0,02 et 0,2 et très avantageusement entre 0,05 et 0,15. Selon l'invention, s est compris entre 0 et 0,2, de manière préférée, s est compris entre 0,01 et 0,2 et de manière très préférée s est compris entre 0,02 et 0,1. La valeur prise par w est, selon l'invention, comprise entre 0 et 0,2, de préférence comprise entre 0 et 0,1.
Conformément à l'invention, X est préférentiellement choisi parmi le silicium, l'étain et le titane, très préférentiellement X est le silicium, Z est préférentiellement choisi parmi l'aluminium, le bore, le fer, l'indium et le gallium et très préférentiellement Z est l'aluminium. De manière préférée, X est le silicium : le solide cristallisé IM-16 selon l'invention est alors, lorsque l'oxyde de germanium et l'élément Z sont présents, un métallogermanosilicate cristallisé présentant un diagramme de diffraction des rayons X identique à celui décrit dans le tableau 1, en particulier lorsqu'il se trouve sous sa forme brute de synthèse. De manière encore plus préférée, X est le silicium et Z est l'aluminium : le solide cristallisé IM-16 selon l'invention est alors un aluminogermanosilicate cristallisé présentant un diagramme de diffraction des rayons X identique à celui décrit dans le tableau 1, en particulier lorsqu'il se trouve sous sa forme brute de synthèse.
Dans le cas où le solide cristallisé IM-16 selon l'invention se présente sous sa forme brute de synthèse, c'est-à-dire directement issu de la synthèse et préalablement à toute étape de calcination(s) et/ou d'échange(s) d'ions bien connue de l'Homme du métier, ledit solide IM-16 comporte au moins une espèce organique telle que celle décrite ci-après ou ses produits de décomposition, ou encore ses précurseurs. Sous forme brute de synthèse, la (ou les) espèce(s) organique(s) R présente(s) dans la formule générale définissant le solide IM-16 est (sont) au moins en partie, et de préférence entièrement, la(les)dite(s) espèce(s) organique(s). Selon un mode préféré de l'invention, R est le cation 1-éthyl-3-méthylimidazolium. Ladite espèce organique R, qui joue le rôle de structurant, peut être éliminée par les voies classiques de l'état de la technique comme des traitements thermiques et/ou chimiques.
Le solide cristallisé IM-16 selon l'invention est de préférence un solide zéolithique.
L'invention concerne également un procédé de préparation du solide cristallisé IM-16 dans lequel on fait réagir un mélange aqueux comportant au moins une source d'au moins un oxyde XO₂, éventuellement au moins une source d'au moins un oxyde Z₂O₃, éventuellement au moins une source d'au moins un oxyde de germanium, au moins une espèce organique R et au moins une source d'ions fluorures, le mélange présentant préférentiellement la composition molaire suivante :

| | |
|---|---|
| (XO₂⁺GeO₂)/Z₂O₃ | : au moins 5, de préférence au moins 10, |
| H₂O/(XO₂+GeO₂) | : 1 à 50, de préférence 2 à 30, |
| R/(XO₂+GeO₂) | : 0,1 à 3, de préférence 0,25 à 1, |
| XO₂/GeO₂ | : 0,5 à ∞, de préférence 1 à 10, et de manière très préférée de 1,5 à 4, |
| F/(XO₂+ GeO₂) | : 0,1 à 2, de préférence 0,2 à 1, |

où X est un ou plusieur(s) élément(s) tétravalent(s) différent(s) du germanium, de préférence le silicium, Z est un ou plusieurs élément(s) trivalent(s) choisi(s) dans le groupe formé par les éléments suivants : aluminium, fer, bore, indium et gallium, de préférence l'aluminium. De manière préférée, ledit mélange aqueux comporte au moins une source d'un oxyde de germanium.
Conformément au procédé selon l'invention, R est une espèce organique jouant le rôle de structurant organique. Préférentiellement, R est le composé azoté 1-éthyl-3-méthyl-imidazolium.
La source de l'élément X peut être tout composé comprenant l'élément X et pouvant libérer cet élément en solution aqueuse sous forme réactive. Avantageusement, lorsque l'élément X est le silicium, la source de silice peut être l'une quelconque de celles couramment utilisées dans la synthèse des zéolithes, par exemple de la silice solide en poudre, de l'acide silicique, de la silice colloïdale ou de la silice dissoute ou du tétraéthoxysilane (TEOS). Parmi les silices en poudre, on peut utiliser les silices précipitées, notamment celles obtenues par précipitation à partir d'une solution de silicate de métal alcalin, telles que des silices aérosiles, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous la marque déposée "LUDOX".
La source de germanium peut être tout composé comprenant l'élément germanium et pouvant libérer cet élément en solution aqueuse sous forme réactive. La source de germanium peut être un oxyde de germanium cristallisé sous les formes dites quartz ou rutile. On peut aussi utiliser des sources de germanium telles que le tétraéthoxygermanium ou le tétraisopropoxygermanium. La source de germanium est de préférence un oxyde de germanium amorphe GeO₂.
La source de l'élément Z peut être tout composé comprenant l'élément Z et pouvant libérer cet élément en solution aqueuse sous forme réactive. Dans le cas préféré où Z est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.
Le fluor peut être introduit sous forme de sels de métaux alcalins ou d'ammonium comme par exemple NaF, NH₄F, NH₄HF₂ ou sous forme d'acide fluorhydrique ou encore sous forme de composés hydrolysables pouvant libérer des anions fluorures dans l'eau comme le fluorure de silicium SiF₄ ou les fluorosilicates d'ammonium (NH₄)₂SiF₆ ou de sodium Na₂SiF₆.
Selon un mode de réalisation préféré du procédé selon l'invention, on fait réagir un mélange aqueux comportant de la silice, éventuellement de l'alumine, un oxyde de germanium, de l'hydroxyde de 1-éthyl-3-méthylimidazolium et une source d'ions fluorures.
Le procédé selon l'invention consiste à préparer un mélange réactionnel aqueux appelé gel et renfermant au moins une source d'au moins un oxyde XO₂, éventuellement au moins une source d'au moins un oxyde GeO₂, éventuellement au moins une source d'au moins un oxyde Z₂O₃, au moins une source d'ions fluorures, et au moins une espèce organique R. De manière préférée, ledit mélange réactionnel aqueux renferme au moins une source d'au moins un oxyde GeO₂. Les quantités desdits réactifs sont ajustées de manière à conférer à ce gel une composition permettant sa cristallisation en solide cristallisé IM-16 de formule générale mXO₂ : nGeO₂ : pZ₂O₃ : qR : sF : wH₂O, où m, n, p, q, s et w répondent aux critères définis plus haut. Puis le gel est soumis à un traitement hydrothermal jusqu'à ce que le solide cristallisé IM-16 se forme. Le gel est avantageusement mis sous conditions hydrothermales sous une pression de réaction autogène, éventuellement en ajoutant du gaz, par exemple de l'azote, à une température comprise entre 120°C et 200°C, de préférence entre 140°C et 180°C, et de manière encore plus préférentielle à une température qui ne dépasse pas 175°C jusqu'à la formation des cristaux de solide IM-16 selon l'invention. La durée nécessaire pour obtenir la cristallisation varie généralement entre 1 heure et plusieurs mois en fonction de la composition des réactifs dans le gel, de l'agitation et de la température de réaction. La mise en réaction s'effectue sous agitation ou en absence d'agitation.
Il peut être avantageux d'additionner des germes au mélange réactionnel afin de réduire le temps nécessaire à la formation des cristaux et/ou la durée totale de cristallisation. Il peut également être avantageux d'utiliser des germes afin de favoriser la formation du solide cristallisé IM-16 au détriment d'impuretés. De tels germes comprennent des solides cristallisés, notamment des cristaux de solide IM-16. Les germes cristallins sont généralement ajoutés dans une proportion comprise entre 0,01 et 10 % de la masse des oxydes (XO₂+GeO₂), XO₂ étant de préférence de la silice, utilisée dans le mélange réactionnel.
A la fin de la réaction, la phase solide est filtrée et lavée ; elle est ensuite prête pour des étapes ultérieures telles que le séchage, la déshydratation et la calcination et/ou l'échange d'ions. Pour ces étapes, toutes les méthodes conventionnelles connues de l'Homme du métier peuvent être employées.
La présente invention concerne également l'utilisation dudit solide IM-16 en tant qu'adsorbant. De préférence, ledit solide IM-16 est débarrassé de l'espèce organique, de préférence du cation 1-éthyl-3-méthylimidazolium, lorsqu'il est utilisé comme adsorbant. Lorsqu'il est utilisé comme adsorbant, le solide cristallisé IM-16 selon l'invention est généralement dispersé dans une phase matricielle inorganique qui contient des canaux et des cavités qui permettent l'accès du fluide à séparer au solide cristallisé. Ces matrices sont préférentiellement des oxydes minéraux, par exemple des silices, des alumines, des silices-alumines ou des argiles. La matrice représente de manière générale entre 2 et 25% en masse de l'adsorbant ainsi formé.

L'invention est illustrée au moyen des exemples suivants.

### Exemple 1 : préparation d'un solide IM-16 selon l'invention.

On prépare d'abord une solution d'hydroxyde de 1-éthyl-3-méthylimidazolium comme suit : 20 g d'une solution aqueuse à 50% en masse de bromure de 1-éthyl-3-méthylimidazolium (Solvionic), soit 52,33 mmol, sont versés dans un flacon en polypropylène de 500 mL (Nalgen). 52,33 g de résine Dowex SBR LC NG, forme OH (Supelco), puis 100 mL d'eau distillée sont ajoutés à cette solution. Le mélange est agité pendant 16 heures à l'aide d'un agitateur magnétique. La solution est séparée de la résine par filtration. Le rendement de l'échange anionique est alors vérifié en comparant les résultats d'un dosage acido-basique classique à l'aide d'une solution d'acide chlorhydrique avec ceux d'un dosage par RMN ¹H en présence de dioxane comme référence interne. La concentration de la solution en cation 1-éthyl-3-méthylimidazolium n'étant alors que de 0,36 mol.L⁻¹, la solution est alors concentrée à l'aide d'un lyophilisateur de paillasse (Cryo Rivoire) jusqu'à ce que le volume de la solution soit d'environ 20 mL. La concentration de la solution est ensuite à nouveau dosée à l'aide des techniques décrites précédemment. L'utilisation de la RMN permet en outre de vérifier que le cation 1-éthyl-3-méthylimidazolium n'est pas dégradé. La concentration finale en hydroxyde de 1-éthyl-3-méthylimidazolium de la solution est 2,41 mol.L⁻¹.

9,597 mL d'une solution aqueuse à 2,41 mol/L d'hydroxyde de 1-éthyl-3-méthylimidazolium (2,967 g de R-OH) sont versés dans un récipient en Téflon de 20 mL de volume intérieur. 1,937 g d'oxyde de germanium (Aldrich) sont ensuite ajoutés à cette solution. Le mélange est agité pendant 15 minutes à l'aide d'un agitateur magnétique. 6,193 ml (5,782 g) de TEOS (tétraéthoxysilane, Fluka) sont alors introduits. Le mélange est ensuite agité pendant 48 heures à température ambiante, afin d'évaporer l'éthanol formé par l'hydrolyse du TEOS et d'éliminer l'excès d'eau. 1,024 ml (1,157 g) de solution aqueuse de HF (acide fluorhydrique 40 % massique, Carlo Erba) sont ensuite ajoutés. Le mélange est alors agité pendant 15 minutes. Après pesée et ajustement de la teneur en eau requise, la composition molaire du mélange obtenu est : 0,6 SiO₂ : 0,4 GeO₂ : 0,5 1-éthyl-3-méthylimidazolium : 0,5 HF : 8 H₂O. La chemise en Téflon contenant le mélange de synthèse (pH ∼7,5) est alors introduite dans un autoclave, qui est placé dans une étuve à 170 °C pour une durée de 14 jours en absence d'agitation.
Après filtration, le produit obtenu est lavé plusieurs fois avec de l'eau distillée. Il est ensuite séché à 70 °C pendant 24 heures. La masse de produit sec obtenue est d'environ 0,81 g.
Le produit solide séché a été analysé par diffraction des rayons X et identifié comme étant constitué de solide IM-16.

### Exemple 2 : préparation d'un solide IM-16 selon l'invention

9,597 mL d'une solution aqueuse à 2,41 mol/L d'hydroxyde de 1-éthyl-3-méthylimidazolium (2,967 g de R-OH), préparée selon la méthode décrite dans l'exemple 1, sont versés dans un récipient en Téflon de 20 mL de volume intérieur. 0,969 g d'oxyde de germanium (Aldrich) sont ensuite ajoutés à cette solution. Le mélange est agité pendant 15 minutes à l'aide d'un agitateur magnétique. 8,253 ml (7,709 g) de TEOS (tetraéthoxysilane, Fluka) sont alors introduits. Le mélange est ensuite agité pendant 48 heures à température ambiante, afin d'évaporer l'éthanol formé par l'hydrolyse du TEOS et d'éliminer l'excès d'eau. 1,024 ml (1,157 g) de solution aqueuse de HF (acide fluorhydrique 40 % massique, Carlo Erba) sont ensuite ajoutés. Le mélange est alors agité pendant 15 minutes. Après pesée et ajustement de la teneur en eau requise, la composition molaire du mélange obtenu est : 0,8 SiO₂ : 0,2 GeO₂ : 0,5 1-éthyl-3-méthylimidazolium : 0,5 HF : 8 H₂O.

La chemise en Téflon contenant le mélange de synthèse (pH ∼ 8) est alors introduite dans un autoclave, qui est placé dans une étuve à 170 °C pour une durée de 14 jours en absence d'agitation.
Après filtration, le produit obtenu est lavé plusieurs fois avec de l'eau distillée. Il est ensuite séché à 70 °C pendant 24 heures. La masse de produit sec obtenue est d'environ 0,88 g.
Le produit solide séché a été analysé par diffraction des rayons X et identifié comme étant constitué de solide IM-16.

### Exemple 3 : préparation d'un solide IM-16 selon l'invention

14,395 mL d'une solution aqueuse à 2,41 mol/L d'hydroxyde de 1-éthyl-3-méthylimidazolium (4,447 g de R-OH), préparée selon la méthode décrite dans l'exemple 1, sont versés dans un récipient en Téflon de 20 mL de volume intérieur. 0,0109 g d'hydroxyde d'aluminium (63 à 67 % en masse d'Al₂O₃, Fluka) et 1,453 g d'oxyde de germanium (Aldrich) sont ensuite ajoutés à cette solution. Le mélange est agité pendant 1 heure à l'aide d'un agitateur magnétique. Environ 0,055 g du produit de la synthèse obtenu dans l'exemple 1 préalablement broyé (soit 2 % de la masse des oxydes SiO₂, GeO₂ et Al₂O₃) sont alors introduits en tant que germes, puis le mélange est agité pendant 15 minutes. 4,643 ml (4,337 g) de TEOS (tetraéthoxysilane, Fluka) sont alors introduits. Le mélange est ensuite agité pendant 48 heures à température ambiante, afin d'évaporer l'éthanol formé par l'hydrolyse du TEOS et d'éliminer l'excès d'eau. 0,768 ml (0,868 g) de solution aqueuse de HF (acide fluorhydrique 40 % massique, Carlo Erba) sont alors ajoutés puis le mélange est agité pendant 15 minutes. Après pesée et ajustement de la teneur en eau requise, la composition molaire du mélange obtenu est : 0,6 SiO₂ : 0,4 GeO₂ : 0,02 Al₂O₃ : 1 1-éthyl-3-méthylimidazolium : 0,5 HF : 8 H₂O (+ 2% en masse de germes par rapport à SiO₂, GeO₂ et Al₂O₃).
La chemise en Téflon contenant le mélange de synthèse (pH ∼ 9) est alors introduite dans un autoclave, qui est placé dans une étuve à 170 °C pour une durée de 14 jours en absence d'agitation.
Après filtration, le produit obtenu est lavé plusieurs fois avec de l'eau distillée. II est ensuite séché à 70 °C pendant 24 heures. La masse de produit sec obtenue est d'environ 1,21 g.

Le produit solide séché a été analysé par diffraction des rayons X et identifié comme étant constitué de solide IM-16.

### Exemple 4 : préparation d'un adsorbant contenant le solide cristallisé IM-16.

Le solide utilisé est le solide brut de synthèse de l'exemple 2 et comprenant l'espèce organique 1-éthyl-3-méthylimidazolium. Ce solide subit tout d'abord un chauffage sous balayage d'azote à la température de 200°C pendant 4 heures puis une calcination toujours sous atmosphère d'azote à 550°C pendant 8 heures. A la suite de ces premiers traitements, le solide obtenu est calciné à 550°C pendant 8 heures sous flux d'air puis encore 8 heures sous flux d'oxygène.
Le solide obtenu est alors mis sous forme d'extrudés par malaxage avec de la boehmite (Pural SB3, Sasol) dans un malaxeur à bras en Z et extrusion de la pâte obtenue avec une extrudeuse piston. Les extrudés sont alors séchés à 120°C pendant 12 h sous air et calcinés à 550°C pendant 2 heures sous flux d'air dans un four à moufle.
L'adsorbant ainsi préparé est composé de 80% du solide zéolithique IM-16 et de 20% d'alumine.

## Revendications

1. Solide cristallisé IM-16 présentant un diagramme de diffraction des rayons X incluant au moins les raies inscrites dans le tableau ci-dessous :
| 2 thêta (°) | dhkl (Å) | I/I0 | 2 thêta (°) | dhkl (Å) | I/I0 |
|---|---|---|---|---|---|
| 7,55 | 11,70 | ff | 24,45 | 3,64 | ff |
| 8,73 | 10,12 | FF | 24,68 | 3,60 | ff |
| 9,81 | 9,01 | f | 24,94 | 3,57 | f |
| 10,74 | 8,23 | ff | 25,25 | 3,52 | f |
| 11,59 | 7,63 | ff | 25,46 | 3,50 | ff |
| 13,15 | 6,73 | ff | 26,39 | 3,37 | f |
| 14,53 | 6,09 | ff | 26,96 | 3,31 | ff |
| 15,13 | 5,85 | f | 28,61 | 3,12 | ff |
| 15,30 | 5,79 | ff | 29,74 | 3,00 | ff |
| 15,75 | 5,62 | ff | 30,88 | 2,89 | ff |
| 15,92 | 5,56 | ff | 31,05 | 2,88 | ff |
| 17,51 | 5,06 | ff | 31,81 | 2,81 | ff |
| 17,64 | 5,02 | ff | 32,16 | 2,78 | ff |
| 19,70 | 4,50 | ff | 34,61 | 2,59 | ff |
| 20,12 | 4,41 | ff | 35,29 | 2,54 | ff |
| 23,32 | 3,81 | f | 35,49 | 2,53 | ff |
| 23,73 | 3,75 | f | 36,86 | 2,44 | ff |
| 24,08 | 3,69 | mf | | | |
où FF = très fort ; m = moyen ; f = faible ; F = fort ; mf = moyen faible ; ff = très faible et présentant une composition chimique exprimée par la formule générale suivante : mXO₂ : nGeO₂ : pZ₂O₃ : qR : sF : wH₂O dans laquelle R représente une ou plusieurs espèce(s) organique(s), X représente un ou plusieurs élément(s) tétravalent(s) différent(s) du germanium, Z représente au moins un élément trivalent et F est le fluor, m, n, p, q, s et w représentant respectivement le nombre de moles de XO₂, GeO₂, Z₂O₃, R, F et H₂O et m est compris entre 0,2 et 1, n est compris entre 0 et 0,8, p est compris entre 0 et 0,1, q est compris entre 0 et 0,2, s est compris entre 0 et 0,2 et w est compris entre 0 et 0,2.

2. Solide cristallisé IM-16 selon la revendication 1 dans lequel X est le silicium.

3. Solide cristallisé IM-16 selon la revendication 1 ou la revendication 2 dans lequel Z est l'aluminium.

4. Solide cristallisé IM-16 selon l'une des revendications 1 à 3 dans lequel le rapport {(n+m)/p} est supérieur ou égal à 10, n est compris entre 0,05 et 0,8, p est compris entre 0 et 0,1, q est compris entre 0 et 0,2, s est compris entre 0 et 0,2 et w est compris entre 0 et 0,2.

5. Procédé de préparation d'un solide cristallisé IM-16 selon l'une des revendications 1 à 4 consistant à procéder au mélange, en milieu aqueux, d'au moins une source d'au moins un oxyde XO₂, éventuellement d'au moins une source d'au moins un oxyde Z₂O₃, évenuellement d'au moins une source d'au moins un oxyde GeO₂, d'au moins une source d'ions fluorures, et d'au moins une espèce organique R constituée par le cation 1-éthyl-3-méthylimidazolium puis à procéder au traitement hydrothermal dudit mélange jusqu'à ce que ledit solide cristallisé IM-16 se forme.

6. Procédé de préparation d'un solide cristallisé IM-16 selon la revendication 5 tel que la composition molaire du mélange réactionnel est telle que :
| | |
|---|---|
| (XO₂⁺GeO₂)/Z₂O₃ | : au moins 5, |
| H₂O/(XO₂+GeO₂) | : 1 à 50, |
| R/(XO₂+GeO₂) | : 0,1 à 3, |
| XO₂/GeO₂ | : 0,5 à ∞, |
| F/(XO₂+ GeO₂) | : 0,1 à 2. |

7. Procédé de préparation selon l'une des revendications 5 à 6 tel que des germes sont additionnés au mélange réactionnel.

8. Utilisation du solide cristallisé IM-16 selon l'une des revendications 1 à 4 ou préparé selon l'une des revendications 5 à 7 comme adsorbant.

## Patentansprüche

1. Kristallisierter Feststoff IM-16, der ein Röntgenbeugungsdiagramm aufweist, welches mindestens die Signale umfasst, die in der untenstehenden Tabelle aufgeführt sind:
| 2 theta (°) | dₕₖₗ(Å) | I/I0 | 2 theta (°) | dₕₖₗ(Å) | I/I0 |
|---|---|---|---|---|---|
| 7,55 | 11,70 | SS | 24,45 | 3,64 | SS |
| 8,73 | 10,12 | SS | 24,68 | 3,60 | SS |
| 9.81 | 9,01 | S | 24,94 | 3,57 | S |
| 10,74 | 8,23 | SS | 25,25 | 3,52 | S |
| 11,59 | 7,63 | SS | 25,46 | 3,50 | SS |
| 13,15 | 6,73 | SS | 26,39 | 3,37 | S |
| 14,53 | 6,09 | SS | 26,39 | 3,31 | SS |
| 15,13 | 5,85 | S | 28,61 | 3,12 | SS |
| 15,30 | 5,79 | SS | 29,74 | 3,00 | SS |
| 15,75 | 5,62 | SS | 30,88 | 2,89 | SS |
| 15,92 | 5,56 | SS | 31,05 | 2,88 | SS |
| 17,51 | 5,08 | SS | 31,81 | 2,81 | SS |
| 17,64 | 5,02 | SS | 32,16 | 2,78 | SS |
| 19,70 | 4,50 | SS | 34,61 | 2,59 | SS |
| 0,12 | 4,41 | SS | 35,29 | 2,54 | SS |
| 23,32 | 3,81 | S | 35,49 | 2,53 | SS |
| 23,73 | 3,75 | S | 6,86 | 2,44 | SS |
| 24,08 | 3,69 | ms | | | |
wobei SS = sehr stark; m = mittel; s = schwach; S = stark; ms = mittelschwach; SS = sehr schwach ist und wobei er eine chemische Zusammensetzung Aufweist, die durch die folgende allgemeine Formel ausgedrückt wird: mXO₂: nGeO₂ : pZ₂O₃: qR : sF : wH₂O, wobei R für eine oder mehrere organische Spezies steht, X für ein oder mehrere vierwertige(s) Element(e) steht, das/die sich von Germanium unterscheidet/unterscheiden, Z für mindestens ein dreiwertiges Element steht und F gleich Fluor ist, wobei m, n, p, q, s und w jeweils für die Molanzahl von XO₂, GeO₂, Z₂O₃, R, F und H₂O stehen und m im Bereich von 0,2 bis 1 liegt, n im Bereich von 0 bis 0,8 liegt, p im Bereich von 0 bis 0,1 liegt, q im Bereich von 0 bis 0,2 liegt, s im Bereich von 0 bis 0,2 liegt und w im Bereich von 0 bis 0,2 liegt.

2. Kristallisierter Feststoff IM-16 nach Anspruch 1, wobei X gleich Silicium ist.

3. Kristallisierter Feststoff IM-16 nach Anspruch 1 oder Anspruch 2, wobei Z gleich Aluminium ist.

4. Kristallisierter Feststoff IM-16 nach einem der Ansprüche 1 bis 3, wobei das Molverhältnis {(n+m)/p} größer oder gleich 10 ist, n im Bereich von 0,05 bis 0,8 liegt, p im Bereich von 0 bis 0,1 liegt, q im Bereich von 0 bis 0,2 liegt, s im Bereich von 0 bis 0,2 liegt und w im Bereich von 0 bis 0,2 liegt.

5. Verfahren zur Herstellung eines kristallisierten Feststoffs IM-16 nach einem der Ansprüche 1 bis 4, welches darin besteht, in wässrigem Milieu mindestens eine Quelle mindestens eines Oxids XO₂, möglicherweise mindestens eine Quelle mindestens eines Oxids Z₂O₃, möglicherweise mindestens eine Quelle mindestens eines Oxids GeO₂, mindestens eine Quelle von Fluoridionen und mindestens eine organische Spezies R, die aus dem 1-Ethyl-3-Methylimidazoliumion besteht, zu vermischen und die Mischung anschließend einer hydrothermalen Behandlung zu unterziehen, bis sich der kristallisierte Feststoff IM-16 bildet.

6. Verfahren zur Herstellung eines kristallisierten Feststoffs IM-16 nach Anspruch 5, derart, dass die molare Zusammensetzung der Reaktionsmischung folgendermaßen ist:
| | |
|---|---|
| (XO₂+GeO₂)/Z₂O₃ | : mindestens 5, |
| H₂O/(XO₂+GeO₂) | : 1 bis 50, |
| R/(XO₂+GeO₂) | : 0,1 bis 3, |
| XO₂/GeO₂ | : 0,5 bis ∞ |
| F/(XO₂+GeO₂) | : 0,1 bis 2 |

7. Herstellungsverfahren nach einem der Ansprüche 5 bis 6, derart, dass der Reaktionsmischung Kristallisationskeime zugesetzt werden.

8. Verwendung des kristallisierten Feststoffs IM-16 nach einem der Ansprüche 1 bis 4, oder hergestellt nach einem der Ansprüche 5 bis 7, als Adsorptionsmittel.

## Claims

1. IM-16 crystallised solid having an X-ray diffraction pattern including at least the lines entered in the table below:
| 2 theta (°) | dhkl (Å) | I/I0 | 2 theta (°) | dhkl (Å) | I/I0 |
|---|---|---|---|---|---|
| 7.55 | 11.70 | ff | 24.45 | 3.64 | ff |
| 8.73 | 10.12 | FF | 24.68 | 3.60 | ff |
| 9.81 | 9.01 | f | 24.94 | 3.57 | f |
| 10.74 | 8.23 | ff | 25.25 | 3.52 | f |
| 11.59 | 7.63 | ff | 25.46 | 3.50 | ff |
| 13.15 | 6.73 | ff | 26.39 | 3.37 | f |
| 14.53 | 6.09 | ff | 26.96 | 3.31 | ff |
| 15.13 | 5.85 | f | 28.61 | 3.12 | ff |
| 15.30 | 5.79 | ff | 29.74 | 3.00 | ff |
| 15.75 | 5.62 | ff | 30.88 | 2.89 | ff |
| 15.92 | 5.56 | ff | 31.05 | 2.88 | ff |
| 17.51 | 5.06 | ff | 31.81 | 2.81 | ff |
| 17.64 | 5.02 | ff | 32.16 | 2.78 | ff |
| 19.70 | 4.50 | ff | 34.61 | 2.59 | ff |
| 20.12 | 4.41 | ff | 35.29 | 2.54 | ff |
| 23.32 | 3.81 | f | 35.49 | 2.53 | ff |
| 23.73 | 3.75 | f | 36.86 | 2.44 | ff |
| 24.08 | 3.69 | mf | | | |
where FF = very high; m = medium; f = low; F = high; mf = medium low; ff = very low and having a chemical composition expressed by the following general formula: mXO₂ : nGeO₂ : pZ₂O₃ : qR : sF : wH₂O, wherein R represents one or more organic species, X represents one or more tetravalent elements different from germanium, Z represents at least one trivalent element and F is fluorine, m, n, p, q, s and w representing respectively the number of moles of XO₂, GeO₂, Z₂O₃, R, F and H₂O and m is between 0.2 and 1, n is between 0 and 0.8, p is between 0 and 0.1, q is between 0 and 0.2, s is between 0 and 0.2 and w is between 0 and 0.2,

2. IM-16 crystallised solid according to claim 1, wherein X is silicon.

3. IM-16 crystallised solid according to claim 1 or claim 2, wherein Z is aluminium.

4. IM-16 crystallised solid according to one of claims 1 to 3, wherein the {(n+m)/p} is greater than or equal to 10, n is between 0.05 and 0.8, p is between 0 and 0.1, q is between 0 and 0.2, s is between 0 and 0.2 and w is between 0 and 0.2.

5. Process for preparing an IM-16 crystallised solid according to one of claims 1 to 4, consisting in initiating the mixing, in an aqueous medium, of at least one source of at least one XO₂ oxide, optionally at least one source of at least one Z₂O₃ oxide, optionally at least one source of at least one GeO₂ oxide, at least one source of fluoride ions and at least one organic species R consisting of the cation 1-ethyl-3-methylimidazolium, then in initiating the hydrothermal treatment of said mixture until said IM-16 crystallised solid is formed.

6. Process for preparing an IM-16 crystallised solid according to claim 5, such that the molar composition of the reaction mixture is such that:
| | |
|---|---|
| (XO₂ + GeO₂)/Z₂O₃ | : at least 5, |
| H₂O/(XO₂ + GeO₂) | : 1 to 50, |
| R/(XO₂ + GeO₂) | : 0.1 to 3, |
| XO₂/GeO₂ | : 0.5 to ∞, |
| F/(XO₂ + GeO₂) | : 0.1 to 2. |

7. Preparation process according to one of claims 5 to 6, such that seeds are added to the reaction mixture.

8. Use of the IM-16 crystallised solid according to one of claims 1 to 4 or prepared in accordance with one of claims 5 to 7 as an adsorbent.
